# EUROPEAN PATENT SPECIFICATION

(11) **EP 2 827 556 B1**
(45) Date of publication and mention of the grant of the patent: **17.02.2016**
(21) Application number: 13306016.0
(22) Date of filing: 16.07.2013
(51) Int. Cl.: H04L 29/08, G06F 17/30

(54) **Method and system for content curation in internet networks**
Verfahren und System zur Inhaltskuration in Internetnetzwerken
Procédé et système de conservation de contenu dans des réseaux internet

(43) Date of publication of application: 21.01.2015
(73) Proprietor: ALCATEL LUCENT, 92100 Boulogne-Billancourt (FR)
(72) Inventor: Ben Houidi, Zied, 91620 NOZAY (FR); Ghamri-Doudane, Samir, 91620 NOZAY (FR)
(74) Representative: Sciaux, Edmond

(56) References cited:
- EP-A1- 2 237 518
- US-A1- 2005 204 276
- US-A1- 2005 240 580
- US-A1- 2007 088 603
- US-A1- 2012 084 349
- US-A1- 2012 203 639
- US-A1- 2013 060 858
- US-A1- 2013 125 157
- US-B1- 8 108 245

## Description

### TECHNICAL FIELD

The present invention relates generally to the field of communications through Internet networks, and, more particularly, to a method and a corresponding system of content curation for providing interesting contents to an end-user device.

### BACKGROUND

Today, Internet users are bombed with a huge amount of information, much more than they can sort by themselves to figure out what content is relevant and what content is not. In this context, several media or content curation tools have emerged in the last couple of years as a trend in the Internet, the purpose of these tools being to cure the content and organize the information in such a way that it is easier for end users to find the interesting content.

Known media news aggregators (like Google News, Yahoo News) and entertainment video platforms (like YouTube) provide users with the interesting content that is likely to attract their attention. This is often based on early detection of the popularity of the content that is hosted on these platforms.

Online content curation tools have been developed using both machines and humans to sort and filter content in such a way that only useful content is displayed to users. Reddit (www.reddit.com) for instance is a social news and entertainment website that relies on user engagement to perform content curation. It is a web platform that takes as an input URLs submitted by users. Other users can either promote these URLs or degrade them depending on the interest of these URLs. This procedure is repeated, and at the end of this process, only the interesting content and the hottest stories are presented in the web platform portal.

The main drawback in the above mentioned approaches is that they heavily rely on user involvement in order to perform the content curation. Users must consciously submit URLs, they must also rate them, so that all this process results in content that is cured and ready to be used. As such, the results on these platforms are heavily influenced by the users, especially those who are very active amongst them.

There is thus a need to propose a passive content curation system that would not rely exclusively on user engagement in order to avoid influenced and/or unrepresentative results. There is also a need that such system be able to automatically cure content of different types (news, videos, etc.), provided by different sources and web platforms, and based on the activity of a representative (in terms of size and diversity) set of users.

US 8 108 245 and US 2005/204276 both disclose a method and system of profiling Web Users and for delivering targeted contents (such as advertising) to a Web user based on his profile.

A method according to the preamble of claim 1 is also disclosed in EP 5 2 237 518.

### SUMMARY OF EXEMPLARY EMBODIMENTS

Some embodiments relate to a method of content curation for providing interesting contents to an end-user device connected to an Internet network according to claim 1.

The content identifier may include a URL extracted from a detected content request.

Alternatively, the content identifier may include a content name extracted from a detected content request performed from an Information Centric Networking, ICN, end-user device.

In some embodiments, the set of attributes may further include at least one of:
a user identifier which anonymously identifies a user of the end-user device from which a content request is originated;
a location identifier which localizes the end-user device from which a content request is originated;
a referrer information extracted from a referrer field of a detected content request.
a user agent identifier information extracted from a user agent field of a detected content request.

A method according to some embodiments may further comprise monitoring responses to said detected content requests transmitted through the Internet network, wherein said set of attributes further includes additional statistical data such as the number of views, the number of sharing and/or the number of comments associated to a same content, based on said responses.

Inferring said interesting contents may further comprise:
classifying said filtered content requests according to content categories based on second predefined rules; and
predicting an evolution of popularity for each content associated to said filtered content requests based on said content categories,
and wherein ranking each filtered content request is performed according to the predicted evolution of popularity for the corresponding content.

In one embodiment of the present invention, a content curation system for providing interesting contents to an end-user device connected to an Internet network is provided according to claim 7.

At least one of said plurality of content request extractors may be a plugin added to the software application layer of an end-user device.

Alternatively or in combination, at least one of said plurality of content request extractors may be a passive probe coupled or integrated to an access point of said Internet network, said access point being adapted to provide access to a subset of end-user devices.

A central content popularity analyzer may further comprise:
a clustering module configured to classify said filtered content requests according to content categories based on second predefined rules; and
a prediction module adapted for predicting an evolution of popularity for each content associated to said filtered content requests based on said content categories,
wherein said software means are adapted for ranking each filtered content request according to the predicted evolution of popularity for the corresponding content.

In some embodiments, a content curation system further comprises a presentation module configured to retrieve said interesting contents from said central content popularity analyzer and to provide said interesting contents on a graphic interface of a connected end-user device.

Additional aspects of embodiments will be set forth, in part, in the detailed description, figures and any claims which follow, and in part will be derived from the detailed description. It is to be understood that both the foregoing general description and the following detailed description are only exemplary and do not limit the claimed inventions.

### Brief Description of the Drawings

Some embodiments of apparatus and/or methods will become more fully understood from the detailed description given herein below and the accompanying drawings which are given by way of illustration only and thus are not limiting of the present invention and wherein:
Figure 1 schematically depicts a system of content curation within an Internet network according to one embodiment;
Figures 2 to 4 are flow diagrams schematically illustrating embodiments of methods which may be implemented in the system of Figure 1.

### DETAILED DESCRIPTION

While example embodiments are capable of various modifications and alternative forms, embodiments thereof are shown by way of example in the drawings and will herein be described in details. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Before discussing example embodiments in more details, it is noted that some example embodiments are described as processes or methods depicted as flowcharts. Although the flowcharts describe the operations as sequential processes, many of the operations may be performed in parallel, concurrently or simultaneously. In addition, the order of operations may be rearranged. The processes may be terminated when their operations are completed, but may also have additional steps not included in the figure. The processes may correspond to methods, functions, procedures, subroutines, subprograms, etc.

Methods discussed below, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present invention. This invention may, however, be embodied in many alternate forms and should not be construed as limited to only the embodiments set forth herein.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising," "includes" and/ or "including", when used herein, specify the presence of stated features, integers, steps, operations, elements and /or components, but do not preclude the presence or addition of one or more other features, integers, steps, operations, elements, components and /or groups thereof. Similarly, it is to be noticed that the term "coupled" should not be interpreted as being restricted to direct connections only. Thus, the scope of the expression "a device A coupled to a device B" should not be limited to devices or systems wherein an output of device A is directly connected to an input of device B. It means that there exists a path between an output of device A and an input of device B which may be a path including other devices or means. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

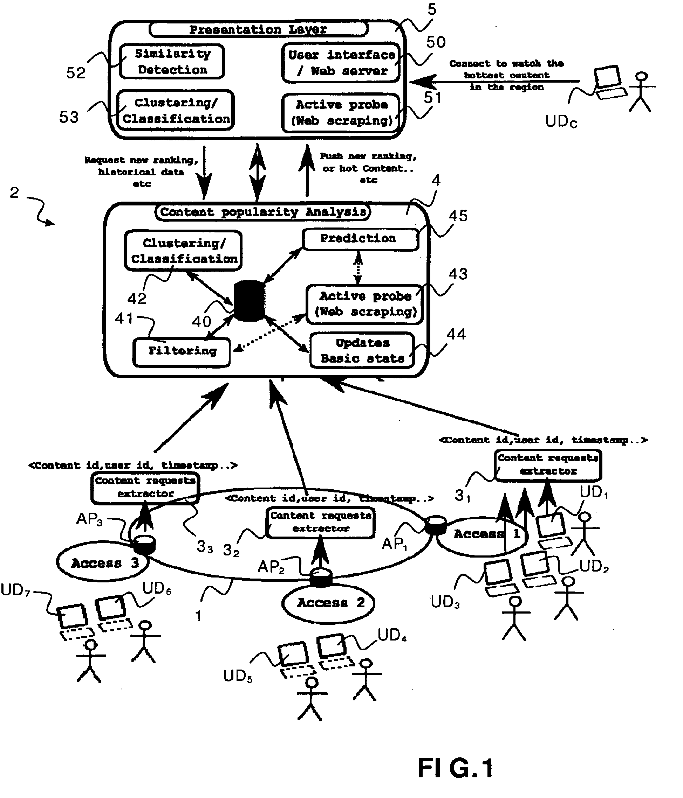

Figure 1 shows schematically a plurality of users with respective end-user devices provided with suitable browsing applications for accessing to an Internet Network 1. In order to keep simplicity in this description it is chosen only to describe seven user communications devices UD₁ to UD₇ which can have access simultaneously or at any time to Internet, although such a system normally includes a high number of user communications devices. The Internet is a global system of interconnected computer networks that use the standard Internet protocol Suite (TCP/IP) to serve billions of users worldwide. It is a network of networks that consists of millions of private, public, academic, business, and government networks, of local to global scope, that are linked by a broad array of electronic, wireless and optical networking technologies. Such internet may also imply a private computer network coupling a plurality of users of a restricted group, e.g. a company internet communications or computer network.

End-user devices UD₁ to UD₇ each comprises a processor and a program storage device whereon software can be installed further input means like a keyboard, a mouse and screen for viewing the browsed web pages. The screen additionally or alternatively may be a touch screen for inputting browsing instructions. End-user devices UD₁ to UD₇ may be personal computers, smartphones or personal digital assistants.

End-user devices UD₁ to UD₇ are classically coupled to the internet via an access network like a DSL network, an optical network, a cable network or other communications network like mobile communications networks 2G, 3G or even 4G mobile networks. A same access point may provide access to several end-user devices. Hence, as shown in figure 1, end-user devices UD₁, UD₂ and UD₃ may access the internet through access point AP₁, while end-user devices UD₄ and UD₅ may access the internet through access point AP₅ and end-user devices UD₆ and UD₇ may access the internet through access point AP₃.

Users connected to Internet through anyone of end-user devices UD₁ to UD₇ may display media content such as a webpage or relevant portion thereof by classically entering or clicking on a Uniform Resource Locator, referred to as URL.

To design a content curation system that fulfills the key requirements previously presented, i.e. passiveness, wide reach and automation, the basic idea is to passively monitor content requests (visited URLs) and use these requests as an input to a content curation system. Instead of asking the user to actively participate in sorting the content by voting or sharing, it is proposed instead to infer such information from the monitored content requests. Indeed, the more a specific content is requested, the more likely it can interest other people. The basic intuition behind the systems according to embodiments of the invention is that the more the users visit a URL, the more it is likely to interest others.

As illustrated by Figure 1, a content curation system 2 according to one embodiment involves three main parts:
a plurality of content request extractors 3₁, 3₂, 3₃ coupled to Internet network 1;
a central content popularity analyzer 4 coupled to Internet network 1 and to said plurality of content request extractors 3₁, 3₂, 3₃; and
a presentation module 5 configured to retrieve the output of central content popularity analyzer 4 and to provide interesting contents on a graphic interface of a connected end-user device UD_{C}.

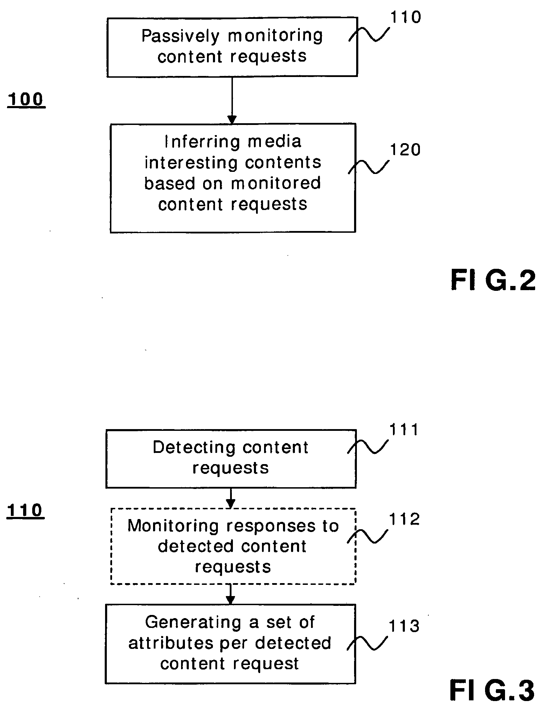

Referring to figure 2 which shows an embodiment of a method 100 which can be implemented by system 2, each of the content request extractors 3₁, 3₂, 3₃ is adapted to passively monitor content requests of a plurality of end-user devices UD₁-UD₇ each time these devices are used for browsing in Internet network 1 (Step 110). Central content popularity analyzer 4 is adapted to infer (Step 120) the interesting contents based on content requests monitored by said plurality of content request extractors 3₁, 3₂, 3₃.

As shown in figure 1 with content extractors 3₂ and 3₃, at least one of said content request extractors may be a passive probe located "in-path" in the network at a place that aggregates for a subset of users all their traffic, for instance coupled or integrated to an access point AP₂, AP₃ of the Internet network 1. The passive probes may be special purpose devices or they can be built into other existing devices such as routers, switches or end node hosts.

Alternatively or in combination, as shown with content extractor 3₁, at least one of said plurality of content request extractors may be a plugin added to the software application layer of an end-user device, e.g. of end-user device UD₁ in figure 1.

In some embodiments, central content popularity analyzer 4 may be a server connected to the Internet. In some embodiments, the presentation module 5 is also a web server to which an Internet user can connect. In some cases, the presentation module 5 may be integrated in the same server than the central content popularity analyzer 4.

Turning now to figure 3, Step 110 performed by each of the content request extractors 3₁, 3₂, 3₃ may include the following sub-steps:
First, each extractor, when passively listening to traffic transiting through the Internet network 1, may detect content requests transmitted by end-user devices (Step 111). For instance, extractor 3₂ may detect any content requests launched from end-user devices UD₄ or UD₅, while extractor 3₂ surveys and detects any content requests launched from end-user devices UD₆ or UD₇. The detection is for instance based on recognizing specific HTTP commands used for transfer control, such as the GET command which is normally used by the browser of an end-user device for asking the access to a webpage.

Based on detected content requests and on parameters that are contained in those requests, each extractor may then generate a set of attributes for each detected content request, said set of attributes including at least a content identifier and a timestamp (Step 113).

In some embodiments adapted for the classical architecture of a web network, the content identifier includes the URL extracted from the detected content request, namely from the GET command.

Other parameters which can be directly derived from the content of the detected content request may be added to the set of attributes. For instance, a GET command in the HTTP protocol includes a referrer field with referrer information corresponding to the address of the previous webpage from which a link to a currently requested page has been asked. A GET command in the HTPP protocol also includes a user-agent field with user agent identifier information identifying the software agent (browser or other) from an end.

In some embodiments, other information or Meta data may be included in the set of attributes: For instance, a user identifier may be extracted from the command request, and properly anonymized so as to transmit only a user identifier which anonymously identifies a user of an end-user device from which a content request is originated. In some embodiments, the set of attributes may further include a location identifier which localizes the end-user device from which a content request is originated. When the extractor is a passive probe, the location identifier may be the location identifier associated with the probe, which is sufficient to give a rough estimation of the geographical region where the end-user device surveyed by the probe is located.

It can also be interesting to survey also the responses to some content requests as transmitted through the network. Hence, as shown with Step 112 in figure 3, the extractors may also monitor responses to the detected content requests transmitted through the Internet network. In this case, the set of attributes generated at Step 113 may be enhanced with further additional statistical data such as the number of views, the number of sharing and/or the number of comments associated to a same content, which could be extracted from the responses.

In any case, sets of data associated with all the content request extractors are transferred, preferably in real time, to the central content popularity analyzer 4, for further processing.

The purpose of the central content popularity analyzer 4 is at least to analyze past content requests, based on the monitored content requests, so as to infer the contents which can be considered interesting for a user. In some embodiments, analyzer 4 also predicts future evolution of popularity.

The result of the processing made at the analyzer 4, and fed to the presentation module 5 may thus be either an absolute ranking of the hottest URLs during a given past period (last hour, last day, etc.), and/or a ranking of a set of elected content items (e.g. URLs) that will get future attention (and that will become the future hottest contents).

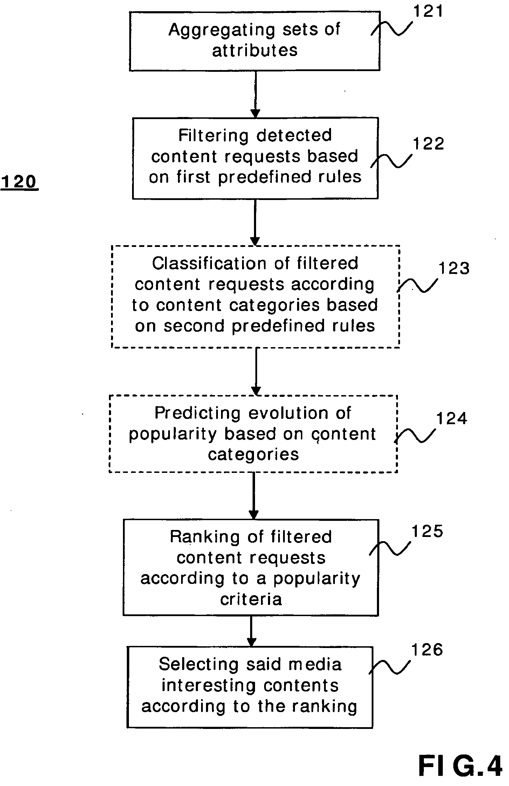

Some embodiments of the analyzer 4 and corresponding processing which may be performed by the analyzer 4 will now be described in reference respectively to figures 1 and 4:
As shown in figure 1, the central content popularity analyzer 4 may comprise a database 40 for aggregating the sets of attributes received from the content requests extractors (Step 121) and storing the information at every step of the processing.

The analyzer 4 may also include a filtering module 41 which advantageously filter the detected content requests based on the aggregated sets of attributes in order to eliminate irrelevant content requests (Step 122). By "irrelevant", one means contents items or URLs which are not voluntarily requested or visited by a user of an end-user device, even if a content request, namely a GET command, has been generated by the end-user device. This might be the case for instance with antivirus software applications which can produce such content requests without the user being aware of, or any software application running on the device which can automatically visit some URLs for updating purposes. Other "irrelevant" content requests may consist of several GET commands associated to the same URL which are issued from the same end-user device and/or from the same user in a given period of time. Broken URLs or old content URLs may also be considered as "irrelevant" for the purpose of providing interesting contents.

Filtering Step 122 is thus performed based on predefined rules, the objective being to keep only the content requests characterizing relevant contents that shall undergo further processing, and discard irrelevant URLs. Hence, the predefined rules can be based on the content identifier, and/or the referrer information, and/or the location identifier, and/or the time stamp, and/or the user identifier, and/or the user-agent identifier information. For instance, the user-agent identifier information can be helpful to identify automatic browsing performed by antivirus software applications or for upgrading purposes. The time stamp can be used to eliminate old contents whose interest has decreased with time.

In some embodiments, the analyzer 4 may include an active probe 43 acting as a web scraper to retrieve a content based on the extracted URL in order to better assess its relevance. Broken URLs can also be identified through active probe 43.

Once the filtering step has occurred, analyzer 4 may rank the filtered content requests according to a popularity criteria (Step 125) and then select what interesting contents should be provided to a user, based on this ranking (Step 126). This can be performed through a dedicated software module 44 within the analyzer, said module 44 updating statistics and counters related to the content requests based on the received set of attributes. Popularity criteria can be estimated based only on the attributes transferred by the extractors, and/or on additional information which may help to characterize the popularity of certain contents (e.g. number of views, number of sharing, number of comments and number of likes etc.) and may be extracted by the active probe 43 if present.

In some embodiments, the analyzer 4 may include a user profiler module (not shown) which assigns a behavior profile to each user (for instance based on the anonymized user identifier transferred by the extractors), and creates a ranking of content items according to the user behavior, thus providing a content curation analysis on a per-user basis. Hence, by analyzing the past behavior of a user, it is possible to automatically learn its interests and provide also "personalized" content curation. For instance, a user who interested in soccer will receive a higher proportion of soccer URLs compared to users who are not interested in Soccer.

Steps 121, 122, 125 and 126 may be sufficient to provide interesting contents based on past content requests. However, as previously indicated, analyzer 4 may also predicts future evolution of popularity. In order to do so, analyzer 4 further includes a clustering module 42 configured to classify each content request according to the type of content it is targeting (Step 123) and a prediction module 45 adapted to predict an evolution of popularity for each content associated to the filtered content requests based at least on the content categories (Step 124). The ranking Step 125 is then performed according to the predicted evolution of popularity.

The classification under content categories can be done based on a set of predefined rules. Custom clustering techniques from the literature can be also used. The classification/clustering is useful in order to adapt, optimize and better tune the popularity prediction module. Indeed, different types of contents may have different popularity characteristics. For instance, news may have a short time interest, while the popularity of a video clip may be interesting for a longer period. It is therefore useful to apply different prediction algorithms for different content items. In some embodiments, the prediction module 45 may also use the additional data provided by active probe 43 for refining the prediction.

The central content popularity analyzer 4 may either push content to the presentation module 5, or can serve the presentation layer in "pull mode", on response to an explicit request from the presentation module. The pushed content can be, for instance, an updated ranking of content items which will become popular in a next time window, an alarm saying that a given content item will become popular, etc.

The presentation module 5 is the interface to a connected user UD_{C} for accessing and using the content curation service provided by system 2. It thus includes at least an interface module 50 for retrieving from analyzer 4, the list of content IDs that are popular or of interest and for delivering them to the user UD_{C}.

In some embodiments, the presentation module 5 may also include a clustering/classification module 53 for structuring the results according to a more detailed classification.

Module 5 may also include an active probe 51 (typically a web scraper) in order to retrieve the selected hottest contents before their presentation to the user. Thanks to the active probe, a similarity detection module 52 of the presentation module can compare the elected content items in order to remove (or cluster) redundant (or similar) content items. For instance, different articles that deal with the same news or event can be clustered together when presented to the users.

Although some embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

For instance, although the content curation system 2 has been described within a classical architecture of the Web network, the system can also work for other architectures, such as Information Centric Networks (ICN) where the network equipments are natively "content requests"-aware and where the passive monitoring of the content requests may consist in extracting directly the interest packets. In this kind of network, the content name included in all the interest packets play the role of the URL in the HTTP GET command and can be extracted to be used in the content identifier.

## Claims

1. A method (100) of content curation for providing interesting contents to an end-user device (UD_{C}) connected to an Internet network (1), said method comprising the steps of:
passively monitoring (110) content requests of a plurality of end-user devices (UD₁-UD₇) when connected to said Internet network (1); and
inferring (120) said interesting contents based on said monitored content requests,
wherein passively monitoring (110) content requests comprises:
detecting (111) content requests transmitted by said plurality of end-user devices (UD₁-UD₇); and
based on detected content requests, generating (113) a set of attributes for each detected content request, said set of attributes including at least a content identifier and a timestamp,
and wherein inferring (120) said interesting contents comprises:
aggregating (121) sets of attributes associated to detected content requests;
filtering (122) said detected content requests based on first predefined rules in order to eliminate irrelevant aggregated sets of attributes;
ranking (125) each filtered content request according to a popularity criteria; and
selecting (126) said interesting contents according to the ranking.

2. A method according to claim 1, wherein said content identifier includes a URL extracted from a detected content request.

3. A method according to claim 1, wherein said content identifier includes a content name extracted from a detected content request performed from an Information Centric Networking, ICN, end-user device.

4. A method according to any one of claims 1 to 3, wherein said set of attributes further includes at least one of:
a user identifier which anonymously identifies a user of the end-user device from which a content request is originated;
a location identifier which localizes the end-user device from which a content request is originated;
a referrer information extracted from a referrer field of a detected content request.
a user agent identifier information extracted from a user agent field of a detected content request.

5. A method according to any one of claims 1 to 4, further comprising monitoring (112) responses to said detected content requests transmitted through the Internet network, wherein said set of attributes further includes additional statistical data such as the number of views, the number of sharing and/or the number of comments associated to a same content, based on said responses.

6. A method according to claim 1, wherein inferring (120) said interesting contents further comprises:
classifying (123) said filtered content requests according to content categories based on second predefined rules; and
predicting (124) an evolution of popularity for each content associated to said filtered content requests based on said content categories,
and wherein ranking (125) each filtered content request is performed according to the predicted evolution of popularity for the corresponding content.

7. A content curation system (2) for providing interesting contents to an end-user device (UD_{C}) connected to an Internet network (1), said system (2) comprising:
a plurality of content request extractors (3₁, 3₂, 3₃) coupled to said Internet network and adapted to passively monitor content requests of a plurality of end-user devices (UD₁-UD₇) connected to said Internet network (1); and
a central content popularity analyzer (4) coupled to said Internet network (1) and to said plurality of content request extractors (3₁, 3₂, 3₃), said analyzer (4) being adapted to infer (120) said interesting contents based on content requests monitored by said plurality of content request extractors (3i, 3₂, 3₃),
wherein each of said plurality of content request extractors (3₁, 3₂, 3₃) is configured
to detect content requests transmitted by said plurality of end-user devices (UD₁-UD₇); and
to generate, based on detected content requests, a set of attributes for each detected content request, said set of attributes including at least a content identifier and a timestamp, and
wherein said central content popularity analyzer (4) comprises:
a database (40) for aggregating sets of attributes associated to detected content requests and transmitted by said-plurality of content request extractors (3₁, 3₂, 3₃);
a filtering module (41) configured to filter detected content requests attributes based on first predefined rules in order to eliminate irrelevant aggregated sets of attributes; and
software means (44) adapted for ranking each filtered content request according to a popularity criteria and for selecting said interesting contents according to the ranking.

8. A content curation system (2) according to claim 7, wherein at feast one of said plurality of content request extractors (3₁, 3₂, 3₃) is a plugin added to the software application layer of an end-user device (UD₁).

9. A content curation system (2) according to any one of claims 7 and 8, wherein at least one of said plurality of content request extractors (3₁, 3₂, 3₃) is a passive probe coupled or integrated to an access point (AP₁, AP₂, AP₃) of said Internet network (1), said access point (AP₁, AP₂, AP₃) being adapted to provide access to a subset of end-user devices (UD₄, UD₅; UD₆, UD₇).

10. A content curation system (2) according to claim 9, wherein said central content popularity analyzer (4) further comprises:
a clustering module (42) configured to classify said filtered content requests according to content categories based on second predefined rules; and
a prediction module (45) adapted for predicting (124) an evolution of popularity for each content associated to said filtered content requests based on said content categories,
and wherein said software means (44) are adapted for ranking each filtered content request according to the predicted evolution of popularity for the corresponding content.

11. A content curation system (2) according to any one of claims 7 to 10, further comprising a presentation module (5) configured to retrieve said interesting contents from said central content popularity analyzer (4) and to provide said interesting contents on a graphic interface of a connected end-user device (UD_{C}).

## Patentansprüche

1. Verfahren (100) zum Kuratieren von Inhalten für die Bereitstellung interessanter Inhalte für ein Endbenutzergerät (UD_{C}), das mit einem Internetnetzwerk (1) verbunden ist, wobei besagtes Verfahren folgende Schritte umfasst:
passives Überwachen (110) von Inhaltsanfragen einer Vielzahl von Endbenutzergeräten (UD₁-UD₇), wenn diese mit besagtem Internetnetzwerk (1) verbunden sind; und
Ableiten (120) der besagten interessanten Inhalte basierend auf besagten überwachten Inhaltsanfragen,
wobei das passive Überwachen (110) von Inhaltsanfragen Folgendes umfasst:
Erfassen (111) von Inhaltsanfragen, die von der besagten Vielzahl von Endbenutzergeräten (UD₁-UD₇) gesendet werden; und
basierend auf erfassten Inhaltsanfragen, Erzeugen (113) eines Attributsatzes für jede erfasste Inhaltsanfrage, wobei besagter Attributsatz mindestens einen Inhaltsidentifikator und einen Zeitstempel umfasst,
und wobei das Ableiten (120) der besagten interessanten Inhalte Folgendes umfasst:
Vereinigen (121) von Attributsätzen in Zusammenhang mit erfassten Inhaltsanfragen;
Filtern (122) besagter erfasster Inhaltsanfragen basierend auf ersten vorausdefinierten Regeln, um irrelevante, vereinigte Attributsätze auszuschließen;
Reihen (125) jeder gefilterten Inhaltsanfrage nach Beliebtheitskriterien; und
Auswählen (126) der besagten interessanten Inhalte gemäß der Reihung.

2. Verfahren nach Anspruch 1, wobei besagter Inhaltsidentifikator eine URL umfasst, die von einer erfassten Inhaltsanfrage extrahiert wird.

3. Verfahren nach Anspruch 1, wobei besagter Inhaltsidentifikator einen Inhaltsnamen umfasst, der von einer erfassten Inhaltsanfrage extrahiert wird, die von einem Endbenutzergerät mit informationszentrischer Vernetzung, ICN, durchgeführt wird.

4. Verfahren nach einem beliebigen der Ansprüche 1 bis 3, wobei besagter Attributsatz weiterhin mindestens eines aus Folgendem umfasst:
einen Benutzeridentifikator, der einen Benutzer des Endbenutzergeräts, von dem eine Inhaltsanfrage veranlasst wird, anonym identifiziert;
einen Positionsidentifikator, der das Endbenutzergerät, von dem eine Inhaltsanfrage veranlasst wird, lokalisiert;
eine Referrer-Information, die von einem Referrer-Feld einer erfassten Inhaltsanfrage extrahiert wird,
eine User-Agent-Identifikatorinformation, die von einem User-Agent-Feld einer erfassten Inhaltsanfrage extrahiert wird.

5. Verfahren nach einem beliebigen der Ansprüche 1 bis 4, weiterhin umfassend das Überwachen (112) von Antworten auf besagte erfasste Inhaltsanfragen, die über das Internetnetzwerk gesendet werden, wobei besagter Attributsatz weiterhin zusätzliche Statistikdaten umfasst, wie etwa die Anzahl von Aufrufen, die Anzahl von Teilungen und/oder die Anzahl von Kommentaren in Zusammenhang mit einem gleichen Inhalt, basierend auf besagten Antworten.

6. Verfahren nach Anspruch 1, wobei das Ableiten (120) der besagten interessanten Inhalte weiterhin Folgendes umfasst:
Klassifizieren (123) der besagten gefilterten Inhaltsanfragen nach Inhaltskategorien basierend auf zweiten vorausdefinierten Regeln; und
Prognostizieren (124) einer Beliebtheitsentwicklung für jeden Inhalt in Zusammenhang mit den besagten gefilterten Inhaltsanfragen basierend auf besagten Inhaltskategorien,
und wobei das Reihen (125) jeder gefilterten Inhaltsanfrage gemäß der prognostizierten Beliebtheitsentwicklung für den entsprechenden Inhalt erfolgt.

7. System zum Kuratieren von Inhalten (2) für die Bereitstellung interessanter Inhalte für ein Endbenutzergerät (UD_{C}), das mit einem Internetnetzwerk (1) verbunden ist, wobei besagtes System (2) Folgendes umfasst:
eine Vielzahl von Inhaltsanfragen-Extraktoren (3₁, 3₂, 3₃), die an besagtes Internetnetzwerk gekoppelt und angepasst sind, um Inhaltsanfragen einer Vielzahl von Endbenutzergeräten (UD₁-UD₇), die mit besagtem Internetnetzwerk (1) verbunden sind, passiv zu überwachen; und
einen zentralen Inhaltsbeliebtheits-Analysator (4), der an besagtes Internetnetzwerk (1) und an besagte Vielzahl von Inhaltsanfragen-Extraktoren (3₁, 3₂, 3₃) gekoppelt ist, wobei besagter Analysator (4) zum Ableiten (120) der besagten interessanten Inhalte basierend auf Inhaltsanfragen, die von der besagten Vielzahl von Inhaltsanfragen-Extraktoren (3₁, 3₂, 3₃) überwacht werden, angepasst ist,
wobei jeder der besagten Vielzahl von Inhaltsanfragen-Extraktoren (3₁, 3₂, 3₃) ausgelegt ist
zum Erfassen von Inhaltsanfragen, die von der besagten Vielzahl von Endbenutzergeräten (UD₁-UD₇) gesendet werden; und
basierend auf erfassten Inhaltsanfragen, zum Erzeugen eines Attributsatzes für jede erfasste Inhaltsanfrage, wobei besagter Attributsatz mindestens einen Inhaltsidentifikator und einen Zeitstempel umfasst, und
wobei besagter zentraler Inhaltsbeliebtheits-Analysator (4) Folgendes umfasst:
eine Datenbank (40) zum Vereinigen von Attributsätzen in Zusammenhang mit erfassten Inhaltsanfragen, und gesendet von der besagten Vielzahl von Inhaltsanfragen-Extraktoren (3₁, 3₂, 3₃);
ein Filtermodul (41), das ausgelegt ist zum Filtern erfasster Inhaltsanfragenattribute basierend auf ersten vorausdefinierten Regeln, um irrelevante, vereinigte Attributsätze auszuschließen; und
Softwaremittel (44), die angepasst sind zum Reihen jeder gefilterten Inhaltsanfrage nach Beliebtheitskriterien und zum Auswählen der besagten interessanten Inhalte gemäß der Reihung.

8. System zum Kuratieren von Inhalten (2) nach Anspruch 7, wobei mindestens einer aus der besagten Vielzahl von Inhaltsanfragen-Extraktoren (3₁, 3₂, 3₃) ein Plug-in ist, das der Softwareanwendungsschicht eines Endbenutzergeräts (UD₁) hinzugefügt wird.

9. System zum Kuratieren von Inhalten (2) nach einem beliebigen der Ansprüche 7 und 8, wobei mindestens einer aus der besagten Vielzahl von Inhaltsanfragen-Extraktoren (3₁, 3₂, 3₃) ein passiver Tastkopf ist, der an einen Zugangspunkt (AP₁, AP₂, AP₃) des besagten Internetnetzwerks (1) gekoppelt oder eingebaut ist, wobei besagter Zugangspunkt (AP₁, AP₂, AP₃) angepasst ist, um Zugang zu einem Teilsatz von Endbenutzergeräten (UD₄, UD₅; UD₆, UD₇) bereitzustellen.

10. System zum Kuratieren von Inhalten (2) nach Anspruch 9, wobei besagter zentraler Inhaltsbeliebtheits-Analysator (4) weiterhin Folgendes umfasst:
ein Clusterbildungsmodul (42), das ausgelegt ist zum Klassifizieren der besagten gefilterten Inhaltsanfragen nach Inhaltskategorien basierend auf zweiten vorausdefinierten Regeln; und
ein Prognosemodul (45), das angepasst ist zum Prognostizieren (124) einer Beliebtheitsentwicklung für jeden Inhalt in Zusammenhang mit den besagten gefilterten Inhaltsanfragen basierend auf besagten Inhaltskategorien,
und wobei besagte Softwaremittel (44) angepasst sind zum Reihen jeder gefilterten Inhaltsanfrage gemäß der prognostizierten Beliebtheitsentwicklung für den entsprechenden Inhalt.

11. System zum Kuratieren von Inhalten (2) nach einem beliebigen der Ansprüche 7 bis 10, weiterhin umfassend ein Präsentationsmodul (5), das ausgelegt ist zum Abrufen der besagten interessanten Inhalte vom besagten zentralen Inhaltsbeliebtheits-Analysator (4) und zum Bereitstellen der besagten interessanten Inhalte auf einer grafischen Oberfläche eines verbundenen Endbenutzergeräts (UD_{C}).

## Revendications

1. Procédé (100) d'organisation de contenu en vue de fournir des contenus intéressants à un dispositif d'utilisateur final (UD_{C}) connecté à un réseau Internet (1), ledit procédé comprenant les étapes suivantes :
surveiller passivement (110) les demandes de contenu d'une pluralité de dispositifs d'utilisateur final (UD₁-UD₇) lorsqu'ils sont connectés audit réseau Internet (1) ; et
déduire (120) lesdits contenus intéressants en se basant sur lesdites demandes de contenu surveillées,
surveiller passivement (110) les demandes de contenu comprenant :
détecter (111) les demandes de contenu transmises par ladite pluralité de dispositifs d'utilisateur final (UD₁-UD₇) ; et
en se basant sur les demandes de contenu détectées, générer (113) un ensemble d'attributs pour chaque demande de contenu détectée, ledit ensemble d'attributs comprenant au moins un identifiant de contenu et un horodateur,
et déduire (120) lesdits contenus intéressants comprenant :
regrouper (121) les ensembles d'attributs associés aux demandes de contenu détectées ;
filtrer (122) lesdites demandes de contenu détectées en se basant sur des premières règles prédéfinies afin d'éliminer les ensembles d'attributs regroupés non pertinents ;
classer (125) chaque demande de contenu filtrée conformément à un critère de popularité ; et
sélectionner (126) lesdits contenus intéressants conformément au classement.

2. Procédé selon la revendication 1, avec lequel ledit identifiant de contenu contient une URL extraite d'une demande de contenu détectée.

3. Procédé selon la revendication 1, avec lequel ledit identifiant de contenu contient un nom de contenu extrait d'une demande de contenu détectée exécutée depuis un dispositif d'utilisateur final de réseautage centré sur l'information, ICN.

4. Procédé selon l'une quelconque des revendications 1 à 3, avec lequel ledit ensemble d'attributs contient en outre au moins l'un parmi :
un identifiant d'utilisateur qui identifie de manière anonyme un utilisateur du dispositif d'utilisateur final duquel est issue une demande de contenu ;
un identifiant d'emplacement qui localise le dispositif d'utilisateur final duquel est issue une demande de contenu ;
une information de référent extraite d'un champ de référent d'une demande de contenu détectée ;
une information d'identification d'agent d'utilisateur extraite d'un champ d'agent d'utilisateur d'une demande de contenu détectée.

5. Procédé selon l'une quelconque des revendications 1 à 4, comprenant en outre l'étape de surveiller (112) les réponses auxdites demandes de contenu détectées transmises par le biais du réseau Internet, ledit ensemble d'attributs contenant en outre des données statistiques supplémentaires telles que le nombre de vues, le nombre de partages et/ou le nombre de commentaires associés à un même contenu, en se basant sur lesdites réponses.

6. Procédé selon la revendication 1, selon lequel l'étape de déduire (120) lesdits contenus intéressants comprend en outre :
classifier (123) lesdites demandes de contenu filtrées conformément aux catégories de contenu en se basant sur des deuxièmes règles prédéfinies ; et
prévoir (124) une évolution de la popularité pour chaque contenu associé auxdites demandes de contenu filtrées en se basant sur lesdites catégories de contenu,
et selon lequel l'étape de classer (125) chaque demande de contenu filtrée est exécutée conformément à l'évolution prévue de la popularité pour le contenu correspondant.

7. Système d'organisation de contenu (2) destiné à fournir des contenus intéressants à un dispositif d'utilisateur final (UD_{C}) connecté à un réseau Internet (1), ledit système (2) comprenant :
une pluralité d'extracteurs de demande de contenu (3₁, 3₂, 3₃) connectés audit réseau Internet et adaptés pour surveiller passivement les demandes de contenu d'une pluralité de dispositifs d'utilisateur final (UD₁-UD₇) connectés audit réseau Internet (1) ; et
un analyseur (4) de popularité de contenu central connecté audit réseau Internet (1) et à ladite pluralité d'extracteurs de demande de contenu (3₁, 3₂, 3₃), ledit analyseur (4) étant adapté pour déduire (120) lesdits contenus intéressants en se basant sur lesdites demandes de contenu surveillées par ladite pluralité d'extracteurs de demande de contenu (3₁, 3₂, 3₃),
chacun de ladite pluralité d'extracteurs de demande de contenu (3₁, 3₂, 3₃) étant configuré pour détecter les demandes de contenu transmises par ladite pluralité de dispositifs d'utilisateur final (UD₁-UD₇) ; et
générer, en se basant sur les demandes de contenu détectées, un ensemble d'attributs pour chaque demande de contenu détectée, ledit ensemble d'attributs comprenant au moins un identifiant de contenu et un horodateur, et
ledit analyseur (4) de popularité de contenu central comprenant :
une base de données (40) pour regrouper les ensembles d'attributs associés aux demandes de contenu détectées et transmises par ladite pluralité d'extracteurs de demande de contenu (3₁, 3₂, 3₃) ;
un module de filtrage (41) configuré pour filtrer les attributs de demande de contenu détectés en se basant sur des premières règles prédéfinies afin d'éliminer les ensembles d'attributs regroupés non pertinents ; et
des moyens logiciels (44) adaptés pour classer chaque demande de contenu filtrée conformément à un critère de popularité et pour sélectionner lesdits contenus intéressants conformément au classement.

8. Système d'organisation de contenu (2) selon la revendication 7, avec lequel au moins l'un de ladite pluralité d'extracteurs de demande de contenu (3₁, 3₂, 3₃) est un additiel ajouté à la couche d'application logicielle d'un dispositif d'utilisateur final (UD₁).

9. Système d'organisation de contenu (2) selon l'une quelconque des revendications 7 et 8, avec lequel au moins l'un de ladite pluralité d'extracteurs de demande de contenu (3₁, 3₂, 3₃) est une sonde passive connectée ou intégrée à un point d'accès au réseau (AP₁, AP₂, AP₃) dudit réseau Internet (1), ledit point d'accès au réseau (AP₁, AP₂, AP₃) étant adapté pour fournir l'accès à un sous-ensemble de dispositifs d'utilisateur final (UD₄, UD₅ ; UD₆, UD₇).

10. Système d'organisation de contenu (2) selon la revendication 9, avec lequel ledit analyseur (4) de popularité de contenu central comprend en outre :
un module de groupage (42) configuré pour classifier lesdites demandes de contenu filtrées conformément aux catégories de contenu en se basant sur des deuxièmes règles prédéfinies ; et
un module de prévision (45) adapté pour prévoir (124) une évolution de la popularité pour chaque contenu associé auxdites demandes de contenu filtrées en se basant sur lesdites catégories de contenu,
et avec lequel lesdits moyens logiciels (44) sont adaptés pour classer chaque demande de contenu filtrée est exécutée conformément à l'évolution prévue de la popularité pour le contenu correspondant.

11. Système d'organisation de contenu (2) selon l'une quelconque des revendications 7 à 10, comprenant en outre un module de présentation (5) configuré pour récupérer lesdits contenus intéressants auprès dudit analyseur (4) de popularité de contenu central et pour fournir lesdits contenus intéressants sur une interface graphique d'un dispositif d'utilisateur final (UD_{C}) connecté.
